# DEMANDE DE BREVET EUROPEEN

(11) **EP 2 384 627 A2**
(43) Date de publication de la demande: **09.11.2011**
(21) Numéro de dépôt: 11165146.9
(22) Date de dépôt: 06.05.2011
(51) Int. Cl.: A21B 3/16

(54) **Machine de lavage en ligne pour supports de cuisson**

(30) Priorité: 07.05.2010 FR 1053586
(71) Demandeur: STE d'Application des Silicones Alimentaires, 59360 Le Cateau Cambresis (FR)
(72) Inventeur: Reynes, Jérôme, 59300 Valenciennes (FR)
(74) Mandataire: Cabinet Plasseraud

(57) **Abrégé**

La présente invention concerne une machine de lavage pour supports de cuisson d'une ligne automatisée de cuisson ou de panification, comportant une ouverture d'alimentation (1) par laquelle pénètrent des supports (2) à laver, un module de lavage (3), un module de rinçage (4), et un module de séchage (5), ainsi qu'un convoyeur (6) pour acheminer en succession les supports (2) d'un module au suivant et des moyens de commande pour piloter le fonctionnement automatisé des modules (3,4,5) et du convoyeur (6),

Elle comporte aussi un tunnel dit « horizontal » (7) pourvu de l'ouverture d'alimentation (1) en supports (2), dans lequel s'étend sensiblement horizontalement une première partie du convoyeur (6), ledit tunnel horizontal (7) débouchant sur un tunnel dit « vertical » (8) dans lequel sont agencés du bas vers le haut, le module de lavage (3), le module de rinçage (4) et le module de séchage (5), ledit convoyeur (6) s'étendant de l'ouverture d'alimentation (1) à une ouverture de sortie (9) située à l'extrémité supérieure du tunnel vertical (8), et au-dessus de laquelle est disposé un système de transfert (14) comportant un basculeur (29) pour basculer les supports (2) de la position verticale à la position horizontale, dans laquelle les supports (2) sont ensuite transférés à un dispositif de stockage vertical de supports (2) horizontaux.

## Description

La présente invention se rapporte au domaine technique général du lavage de supports de cuisson ou de panification, lesquels sont utilisés lors de cuissons d'aliments notamment sur des chaînes de cuissons industrielles.

La présente invention concerne plus particulièrement le lavage de supports de cuisson ou panification par l'intermédiaire d'une machine de lavage en ligne, conçue pour être intégrée dans une ligne automatisée de cuisson ou panification. Ces supports permettent de convoyer les produits alimentaires du genre pâtons ou viennoiseries sur la ligne automatisée de panification.

Les supports de cuisson, plats ou alvéolés, comportent par exemple un revêtement du genre silicone ou polymère fluoré. Ces supports de cuisson sont très largement connus en tant que tels et ne seront pas décrits davantage.

Par WO 2004/045360, on connaît, à l'effet de nettoyer de tels supports de cuisson, une machine de lavage pour supports de cuisson

comportant un tunnel dit « horizontal » pourvu d'une ouverture d'alimentation par laquelle pénètrent les supports à laver, un tunnel dit « vertical » sur lequel débouche ledit tunnel horizontal et dans lequel un module de lavage, et un module de rinçage, sont agencés, du bas vers le haut, un module de séchage desdits supports, un convoyeur pour acheminer en succession les supports d'un module au suivant, et dont une première partie s'étend sensiblement horizontalement dans le tunnel horizontal, un système de transfert localisé en aval des modules de lavage, rinçage et séchage, de manière à récupérer successivement les supports et à les transférer vers un dispositif de stockage sensiblement vertical, et des moyens de commande pour piloter le fonctionnement automatisé des modules de lavage rinçage et séchage, du système de transfert et du convoyeur.

WO 2004/045360 divulgue une machine de lavage de supports de cuisson ou de panification qui n'est pas une machine de lavage en ligne, c'est-à-dire qui ne peut pas être mise dans le prolongement direct d'une ligne automatisée de cuisson ou de panification, car la machine selon ce document de brevet est alimentée, au niveau de sa section d'alimentation, par une pile verticale de supports sales à laver, superposés et horizontaux, dont le support inférieur de la pile est libéré du dessous de cette pile, pour tomber sur l'un d'une pluralité de porte-supports, en saillie latérale en porte à faux sur les maillons d'une chaîne sans fin circulant selon une boucle verticale de forme générale carrée ou rectangulaire à coins arrondis, au niveau desquels la chaîne s'enroule sur des poulies ou roues de guidage. Le convoyeur est enfermé dans deux courts tronçons de tunnel inférieur horizontaux, deux tunnels verticaux et latéraux, et un tunnel horizontal supérieur, de sorte que l'ouverture d'entrée des supports à laver dans le tunnel se trouve sur un côté de la section d'alimentation, tandis que l'ouverture de sortie pour les supports nettoyés est une ouverture de façade amovible au niveau du tunnel vertical du côté opposé au tunnel vertical où arrivent les supports à laver, entrés sur des porte-supports alimentés sous la pile verticale de supports à nettoyer. Ces derniers, tombés et fixés par des dispositifs à griffes sur les porte-supports successifs de la chaîne sans fin, sont introduits en partie basse dans un tunnel vertical dans lequel ils s'élèvent, retenus en position verticale sur les porte-supports toujours orientés sensiblement parallèlement à la chaîne, et traversent de bas en haut un poste de lavage et de rinçage, pour déboucher en partie haute du tunnel vertical dans une extrémité latérale d'un tunnel horizontal supérieur, dans lequel les supports lavés et rincés traversent un poste de séchage à air chaud distribué par deux buses de séchage de part et d'autre du plan des supports toujours fixés sur les porte-supports entraînés par la chaîne. Puis, à l'extrémité latérale opposée à leur entrée, les supports, toujours fixés sur leur porte-supports, descendent verticalement dans un tunnel vertical de descente où s'effectue la libération des dispositifs à griffes, de sorte que les supports libérés des porte-supports pivotent dans ce tunnel descendant et s'empilent les uns sur les autres sur une embase de support d'un poste de stockage.

L'architecture générale de cette machine à laver est telle que sa section de chargement occupe une position centrale, autour de laquelle s'étendent la section de lavage et rinçage, dans un tunnel vertical où le convoyeur est ascendant, puis le poste de séchage dans une section délimitée dans un tunnel horizontal supérieur, puis le poste de décharge, dans un tunnel vertical dans lequel le convoyeur est descendant, ces trois postes étant traversés par la chaîne sans fin, qui revient ensuite sous la pile de supports sales à laver dans le poste de chargement.

Si une telle machine à laver permet une économie d'encombrement, et en particulier de surface au sol, par rapport aux autres machines à laver industrielles de l'état de la technique, par contre elle reste d'un encombrement, en particulier horizontal, non négligeable, du fait de la longueur des parties horizontales de la machine, dont la partie supérieure loge le poste de séchage, au-delà duquel le convoyeur passe autour d'une poulie de guidage pour descendre vers le poste de libération d'un système de transfert, pour transférer les supports lavés, rincés et séchés dans un poste de stockage, qui est déporté latéralement à l'extrémité de sortie du tunnel horizontal supérieur, dans le tunnel vertical dans lequel descend le convoyeur.

Une machine de lavage connue par WO 2004/045360 reste donc relativement encombrante, en partie haute et en occupant une surface au sol substantielle, et coûteuse en exploitation du fait de consommations élevées en eau et en produit lessiviel.

Le but de la présente invention vise par conséquent à s'affranchir des limitations mentionnées ci-dessus en réduisant substantiellement l'encombrement, en particulier horizontal, de telles machines de lavage, dont la conception les rend de plus aptes à une intégration complète dans une ligne automatisée de cuisson ou panification industrielle.

La présente invention a donc pour objet de proposer une machine de lavage en ligne ne présentant pas les inconvénients mentionnés, ci-dessus et dont le fonctionnement est optimisé.

Un autre objet de la présente invention vise ainsi à fournir une machine de lavage dont le fonctionnement est optimisé, notamment en limitant la consommation d'eau.

Encore un autre objet de la présente invention vise aussi à fournir une machine de lavage dont le fonctionnement est optimisé, notamment en contrôlant et en limitant la consommation de produit lessiviel.

Selon l'invention, la machine de lavage, du type précité, et connu par WO 2004/045360, se caractérise en ce que le convoyeur s'étend de ladite ouverture d'alimentation dudit tunnel horizontal à une ouverture de sortie située à l'extrémité supérieure dudit tunnel vertical dans lequel ledit module de séchage est agencé au-dessus du module de rinçage entre ce dernier et ladite ouverture de sortie du tunnel vertical, au-dessus duquel est disposé ledit système de transfert récupérant les supports évacués en position sensiblement verticale par l'ouverture de sortie, et les basculant en position sensiblement horizontale, dans laquelle les supports sont transférés audit dispositif de stockage.

Selon un exemple avantageux de réalisation de la machine de lavage conforme à l'invention, le convoyeur, simple et fiable, comporte deux chaînes sans fin avec taquets pour entraîner les supports, qui sont maintenus en contact contre lesdites chaînes chacune en regard de l'une respectivement des deux extrémités latérales du convoyeur.

Selon un exemple de réalisation avantageux la machine de lavage conforme à l'invention, comporte également au moins un moyen de maintien des supports, agencé dans une zone de transition entre le tunnel horizontal et le tunnel vertical, pour maintenir les supports sur le convoyeur et pour éviter un basculement desdits supports lors du convoyage desdits supports dans la zone de transition.

Dans cet exemple de réalisation de la machine de lavage conforme à l'invention, le moyen de maintien comporte avantageusement au moins un bras monté pivotant sur un cadre fixe au voisinage et en regard de chaque extrémité latérale du convoyeur, une roulette montée sur l'extrémité libre de chaque bras et au moins une tige transversale reliant les extrémités libres de deux bras en regard chacun de l'une respectivement des deux extrémités latérales du convoyeur, de manière à venir en appui sur les supports avec les roulettes sous l'effet du poids dudit moyen de maintien.

Selon un exemple de réalisation avantageux de la machine de lavage conforme à l'invention, le système de transfert comporte un basculeur bloquant un support en position sensiblement verticale à son extrémité inférieure dès que ledit support sortant de l'ouverture de sortie du tunnel vertical est logé dans le basculeur, le blocage étant obtenu par l'intermédiaire d'une butée escamotable, un actionneur pour pivoter le basculeur d'une position sensiblement verticale à une position sensiblement horizontale et inversement, et un second actionneur pour évacuer sensiblement horizontalement ledit support lorsque le basculeur est en position sensiblement horizontale. Selon un exemple de réalisation de la machine de lavage conforme à l'invention, le module de lavage comprend avantageusement au moins deux rampes de lavage pourvues de gicleurs et localisées de part et d'autre du trajet des supports, une cuve contenant une réserve de bain de lavage et au moins un tube chauffant immergé dans ladite réserve et associé à une sonde de mesure de température, une pompe de dosage de produit lessiviel, une pompe pour alimenter les rampes de lavage en bain de lavage et un moyen pour récupérer le bain de lavage usagé, associé à un système de filtration.

Dans cet exemple de réalisation de la machine de lavage conforme à l'invention, le module de lavage comporte avantageusement un moyen de contrôle de niveau d'eau dans la cuve et un moyen pour récupérer l'eau de rinçage de manière à remettre à niveau et/ou à régénérer le bain de lavage.

Dans cet exemple de réalisation encore de la machine de lavage conforme à l'invention, le module de lavage comprend, avantageusement de plus, une sonde de mesure de la conductivité électrique du bain de lavage pour contrôler la concentration de produit lessiviel dans le bain de lavage.

Selon un exemple de réalisation de la machine de lavage conforme à l'invention, le module de rinçage comporte avantageusement au moins deux rampes de rinçage pourvues de gicleurs et localisées de part et d'autre du trajet des supports lavés, et une réserve d'eau associée à un générateur d'eau chaude instantanée, pour alimenter les rampes de rinçage en eau chaude, par exemple par la pression du réseau de distribution d'eau, un surpresseur étant disponible en option.

Selon un exemple de réalisation de la machine de lavage conforme à l'invention, le module de séchage comporte avantageusement une soufflerie à air froid alimentant au moins deux rampes de soufflage localisées de part et d'autre du trajet des supports rincés, et qui constituent des lames d'air.

Selon un exemple de réalisation avantageux conforme à l'invention, la machine de lavage comporte de plus au moins un extracteur des buées de lavage.

Selon un exemple de réalisation avantageux de la machine de lavage conforme à l'invention, les moyens de commande permettent de piloter le fonctionnement automatique des modules de lavage, de rinçage et de séchage, ainsi que du système de transfert et de la vitesse d'avance du convoyeur, en fonction de consignes.

Dans cet exemple de réalisation de la machine de lavage conforme à l'invention, les moyens de commande permettent avantageusement de plus de convoyer des supports sans lavage et/ou sans rinçage et/ou sans séchage par désactivation du ou des modules concernés.

Les objets assignés à la présente invention sont également atteints à l'aide d'un sous ensemble d'une ligne automatisée de cuisson ou de panification, comprenant une machine de lavage telle que présentée ci-dessus et associée à un dispositif de stockage vertical pour empiler des supports de cuisson propres sensiblement horizontaux.

Un avantage de la machine de lavage conforme à l'invention réside dans son faible encombrement horizontal, en particulier en partie haute.

En effet, dans la machine de lavage selon l'invention, le système de transfert est installé au-dessus de l'ouverture de sortie du tunnel vertical logeant les modules de lavage, rinçage et séchage, et ce système de transfert est à basculement, et non à renvoi d'angle par roulement de la chaîne du convoyeur autour d'une roue de renvoi comme dans WO 2004/045360, ce qui permet, dans la machine selon la présente invention, d'avoir un convoyeur à chaînes sans fin en forme de L, avec une branche verticale surmontée du système de transfert des supports nettoyés transférés par ce système dans un dispositif de stockage vertical, qui peut être immédiatement adjacent derrière la branche verticale du L du convoyeur, ce qui permet de donner une faible largeur à toute la partie érigée de la machine par rapport à l'état de la technique le plus proche selon le document de brevet précité.

En outre, la machine de lavage selon la présente invention est une machine de lavage en ligne, car elle peut être directement intégrée à une ligne automatisée de cuisson et de panification, sans rupture de charge au niveau de l'alimentation en supports à nettoyer, puisqu'il suffit d'installer le convoyeur de la machine de sorte que sa première partie, logée dans le tunnel horizontal, se trouve directement dans le prolongement d'un convoyeur d'alimentation en supports à nettoyer, et donc, d'une manière générale, la machine selon la présente invention comprend un convoyeur directement dans le prolongement, et, de préférence, en recouvrement partiel dans le tunnel horizontal, avec un convoyeur d'alimentation en supports à laver, pour assurer un transfert direct des supports du convoyeur d'alimentation au convoyeur de la machine de lavage.

Cela n'est clairement pas possible avec la machine de lavage selon WO 2004/045360, pour laquelle des piles de supports à laver doivent être introduites perpendiculairement au plan médian vertical dans lequel circule le convoyeur et les porte-supports. La machine de lavage selon le document de brevet précité n'est pas une machine de lavage en ligne, car elle ne peut pas s'intégrer directement à une ligne automatisée de cuisson ou panification, du fait que sa section d'alimentation n'est conçue que pour traiter des piles de supports à nettoyer, dans un dispositif qui libère successivement les supports inférieurs de la pile sur des porte-supports du convoyeur, sur lesquels les supports à nettoyer sont verrouillés en position par des systèmes à griffes.

Un autre avantage de la machine de lavage conforme à l'invention réside dans un fonctionnement en circuit quasi fermé du module de lavage. Les consommations d'eau et de produit lessiviel sont par conséquent optimisées.

Un autre avantage de la machine de lavage conforme à l'invention réside dans l'utilisation de l'eau de rinçage usagée pour régénérer le bain de lavage et pour remettre à niveau ce dernier. La consommation d'eau s'en trouve donc réduite.

Un autre avantage de la machine de lavage conforme à l'invention est obtenu par l'utilisation d'un dispositif simplifié de stockage vertical des supports, chargé en partie haute par l'intermédiaire du système de transfert. Il n'est donc plus nécessaire d'utiliser un dispositif de stockage vertical comportant un moyen du genre ascenseur soulevant les supports pour pouvoir insérer un nouveau support sous l'empilement desdits supports.

L'invention et ses avantages apparaîtront avec plus de détails dans le cadre de la description qui suit d' exemples de réalisation donnés à titre illustratif et non limitatif, en référence aux figures annexées qui représentent :
- la figure 1, une illustration schématique, en coupe verticale, d'un exemple de réalisation d'une machine de lavage conforme à l'invention, associée à un dispositif de stockage,
- la figure 2, une vue en perspective d'un exemple de réalisation d'une machine de lavage conforme à l'invention, ladite machine de lavage étant représentée sans les panneaux de protection délimitant les tunnels de convoyage,
- la figure 3, une vue agrandie d'un détail d'une machine de lavage conforme à l'invention, montrant un moyen de maintien des supports en contact avec les deux chaînes du convoyeur,
- la figure 4, une vue externe, en perspective, d'un exemple de réalisation de la machine de lavage conforme à l'invention,
- les figures 5a à 5e, différentes phases de fonctionnement d'un système de transfert d'une machine de lavage conforme à l'invention, avec un premier exemple de basculeur,
- la figure 6, une vue en perspective du premier exemple de basculeur,
- la figure 7, une vue analogue à la figure 6 d'un second exemple de basculeur, simplifié par rapport au premier exemple de la figure 6, et
- les figures 8a à 8e des vues respectivement analogues aux figures 5a à 5e pour les mêmes phases de fonctionnement du système de transfert d'une machine de lavage avec le second exemple de basculeur.

Les éléments structurellement et fonctionnellement identiques, présents dans plusieurs figures distinctes, sont affectés d'une seule et même référence numérique ou alphanumérique.

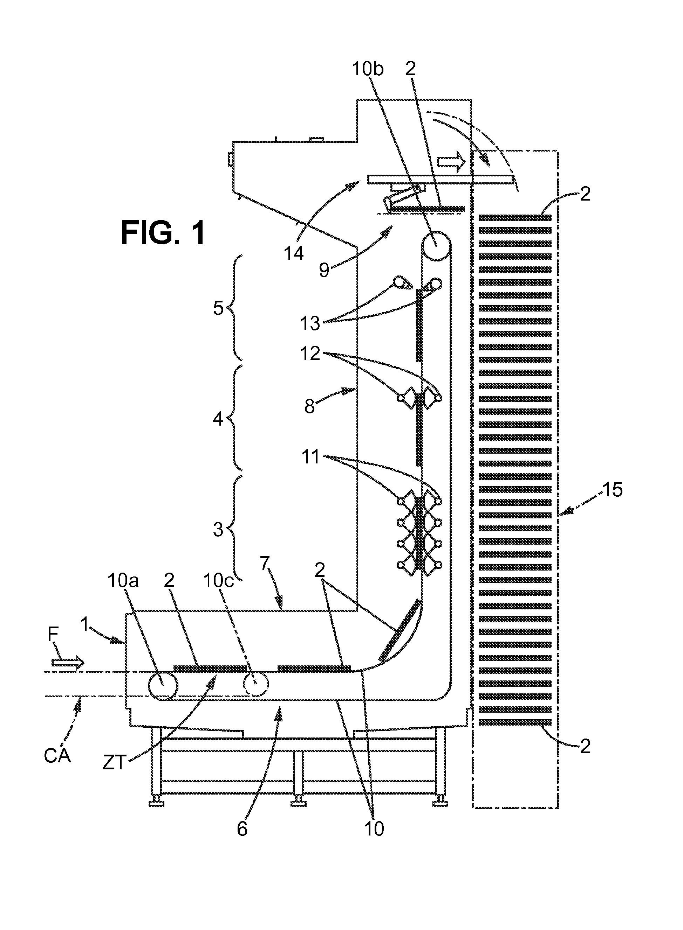

La machine illustrée à la figure 1 , de lavage en ligne pour supports d'une ligne automatisée de cuisson ou de panification, comporte une ouverture d'alimentation 1 par laquelle pénètrent en succession des supports 2, plats ou alvéolés, à laver, un module de lavage 3, un module de rinçage 4 et un module de séchage 5.

Un convoyeur sans fin 6 permet d'acheminer, en succession, les supports 2 d'un module 3 ou 4 ou 5 au suivant, et des moyens de commande permettent de piloter le fonctionnement automatisé des modules 3, 4, 5 et du convoyeur 6, qui est en ligne avec un convoyeur d'alimentation CA en supports 2 à laver, c'est-à-dire dans le prolongement longitudinal du convoyeur CA, en fin de la ligne automatisée de cuisson ou panification.

La machine de lavage comporte un tunnel horizontal 7, lequel est pourvu de l'ouverture d'alimentation 1, et dans lequel s'étend horizontalement une première partie du convoyeur 6, ainsi que la partie terminale du convoyeur d'alimentation CA. Comme représenté sur la figure 1, la partie terminale ou d'extrémité aval du convoyeur d'alimentation CA s'étend, dans le tunnel horizontal 7, sur une distance longitudinale (axiale) et horizontale « en recouvrement » ou « en doublon » de la partie d'extrémité amont ou initiale du convoyeur 6, afin de ménager une zone de transfert ZT des supports 2 à laver arrivant sur le convoyeur CA, dans la direction de la flèche F, et progressivement transférés du convoyeur CA au convoyeur 6, puis pris en charge uniquement par le convoyeur 6, pour un cycle de nettoyage (lavage, rinçage et séchage) dans lequel les supports 2 sont conduits à traverser successivement les modules 3, 4 et 5.

Le tunnel horizontal 7 débouche sur un tunnel vertical 8 dans lequel sont agencés, du bas vers le haut, le module de lavage 3, le module de rinçage 4 et le module de séchage 5.

Une seconde partie du convoyeur 6 s'étend dans le tunnel vertical 8. Le convoyeur 6 s'étend ainsi de l'ouverture d'alimentation 1 à une ouverture de sortie 9 située à l'extrémité supérieure du tunnel vertical 8. Un système de renvoi d'angle, avec guides en arc de cercle, est prévu pour modifier la direction de convoyage lors du passage du tunnel horizontal 7 vers le tunnel vertical 8 pour le brin « supérieur » du convoyeur 6 qui supporte et entraîne les supports 2, et inversement pour le brin « inférieur » ou de retour « à vide » du convoyeur 6 sans supports 2.

Les modules 3, 4 et 5 peuvent comprendre chacun des composants agencés à différents endroits de la machine de lavage, mais les opérations effectives de lavage, rinçage et séchage sont mises en oeuvre exclusivement dans le tunnel vertical 8.

Le convoyeur 6 comporte de préférence deux chaînes 10 sans fin, parallèles et espacées l'une de l'autre, en matière plastique par exemple, avec taquets pour entraîner les supports 2 qui reposent par leurs deux bords latéraux sur les deux chaînes 10 de la partie horizontale du convoyeur 6 et sont toujours maintenues en contact avec les deux chaînes 10 dans le renvoi d'angle avec guides en axe de cercle et dans le tunnel vertical jusqu'à l'ouverture de sortie 9. Les deux chaînes 10 s'étendent chacune entre deux poulies ou roues 10a et 10b, dont l'une assure l'entraînement des chaînes 10 et l'autre le renvoi, la poulie ou roue 10a de tête ou d'amont du convoyeur 6 étant plus proche de l'ouverture d'entrée 1 du tunnel horizontal 7 que la poulie 10c de l'extrémité terminale du convoyeur d'alimentation CA, pour délimiter la zone de transfert ZT des supports 2 du convoyeur d'alimentation CA au convoyeur 6 de nettoyage.

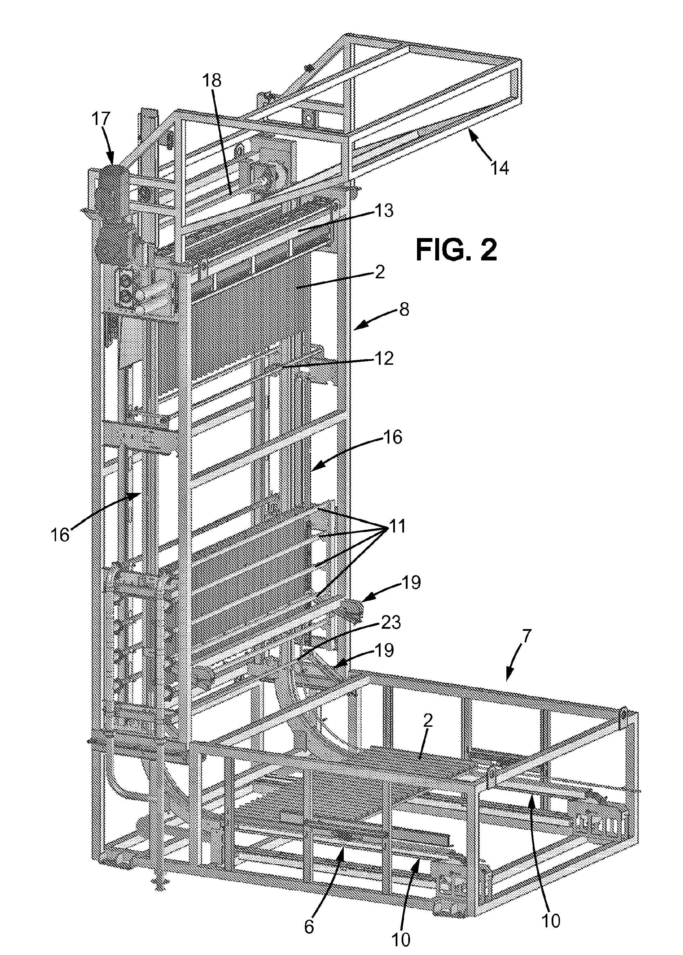

Le convoyeur 6 présente ainsi la forme générale d'un L en élévation latérale, avec une première partie horizontale courte et une seconde partie verticale plus longue, et avec un plan médian vertical qui est sensiblement confondu avec celui du convoyeur d'alimentation CA. Pour le reste, le convoyeur 6 est largement connu en tant que tel et n'est donc pas décrit davantage, sauf pour son entraînement, en référence à la figure 2 ci-après.

Le module de lavage 3 comprend au moins deux rampes de lavage 11 pourvues de gicleurs et localisées de part et d'autre du trajet des supports 2.

Le module de rinçage 4 comporte au moins deux rampes de rinçage 12 pourvues de gicleurs et localisées de part et d'autre du trajet des supports 2 lavés.

Le module de séchage 5 comporte une soufflerie à air froid alimentant, au moins, deux rampes de soufflage 13 localisées de part et d'autre du trajet des supports 2 lavés et rincés, et qui forment des lames d'air.

La machine de lavage comporte également un système de transfert 14, localisé en aval et directement au-dessus du module de séchage 5, de manière à récupérer les supports 2 propres, en position verticale et évacués ou éjectés par l'ouverture de sortie 9.

Le système de transfert 14 permet également de basculer les supports 2 en position horizontale et de les transférer horizontalement vers un dispositif de stockage vertical 15, immédiatement adjacent au tunnel vertical 8, du côté opposé au tunnel horizontal 7.

La figure 2 montre un exemple de réalisation avec quatre rampes de lavage 11, par exemple horizontales, localisées de chaque côté du trajet des supports 2 dans le module de lavage 3.

Le convoyeur 6 comporte de préférence une chaîne sans fin 10 avec taquets de chaque côté latéral du tunnel horizontal 7 et du tunnel vertical 8. Des rails de guidage 16, prenant en sandwich les supports 2, sont prévus dans le tunnel vertical 8, et forment des glissières pour les supports 2.

Un moteur électrique 17 permet d'entraîner l'une des chaînes 10. Le mouvement est transmis à l'autre chaîne 10 par l'intermédiaire d'un arbre de transmission 18.

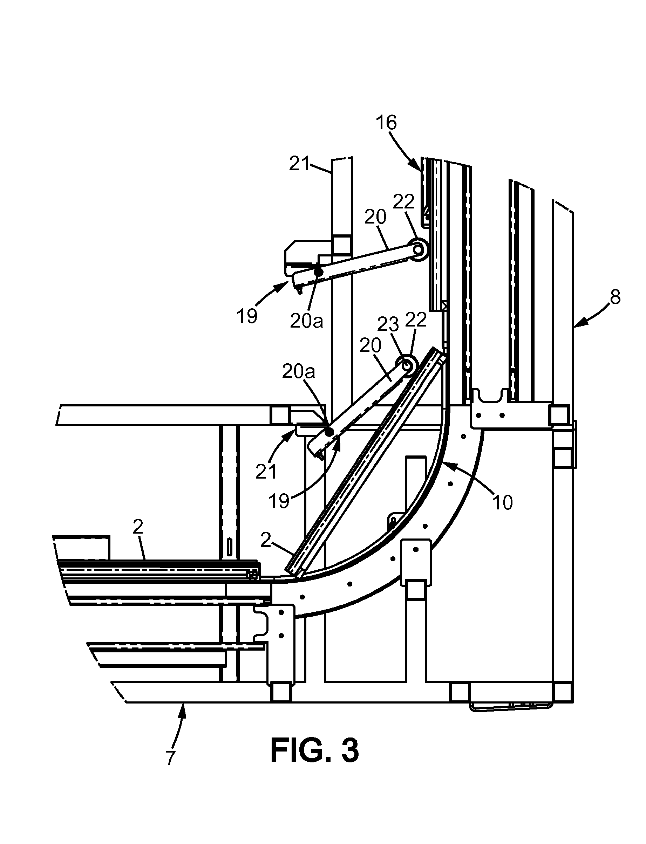

Les figures 2 et 3 montrent une machine de lavage comportant par exemple deux moyens de maintien 19 agencés en amont des rails de guidage 16, dans une zone de transition entre le tunnel horizontal 7 et le tunnel vertical 8, pour maintenir les supports 2 sur le convoyeur 6 (contre les chaînes 10).

Chaque moyen de maintien 19, par exemple montré à la figure 3, comporte un bras 20 monté pivotant grâce à un axe de pivotement 20a sur un cadre fixe 21 au voisinage et en regard de chaque chaîne 10 et une roulette 22 montée sur l'extrémité libre de chaque bras 20.

Une tige transversale 23 relie les extrémités libres de deux bras 20, situés chacun en regard de l'une respectivement des extrémités latérales du convoyeur 6, de manière à ce que le moyen de maintien 19 vienne en appui sur les supports 2 par les roulettes 22, sous l'effet du poids dudit moyen de maintien 19, poussant les supports 2 contre les chaînes 10. On évite ainsi un basculement des supports 2 dans la zone de transition, qui risquerait de bloquer le convoyeur 6.

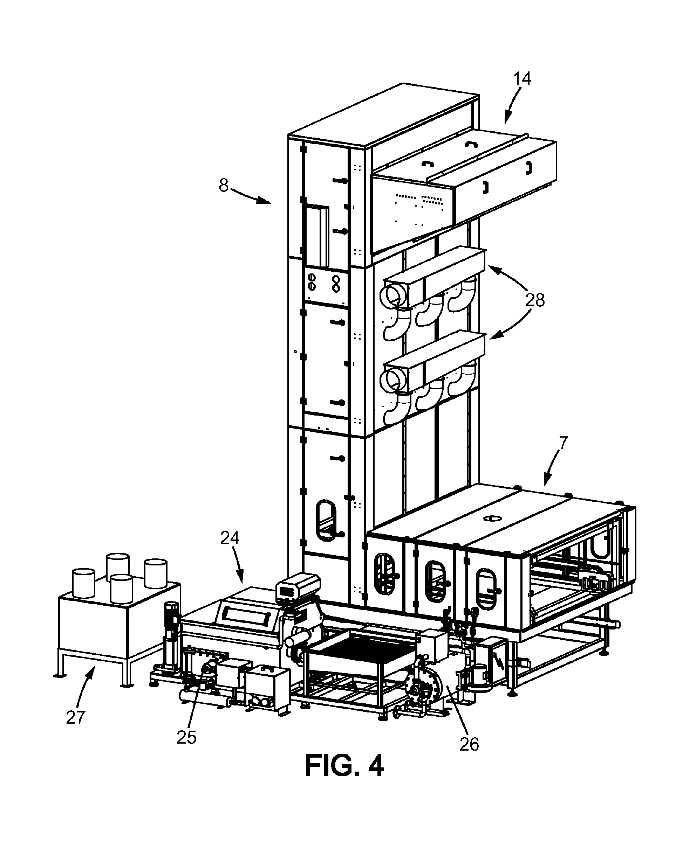

La machine de lavage représentée à la figure 4 comporte également un sous ensemble 24 incluant une cuve contenant une réserve de bain de lavage, un tube chauffant 25 immergé dans la réserve et associé à une sonde de mesure de température pour chauffer le bain de lavage, une pompe de dosage de produit lessiviel, une pompe pour alimenter les rampes de lavage 11 en bain de lavage et un moyen pour récupérer le bain de lavage usagé, associé à un système de filtration.

Le module de lavage 3 comprend avantageusement un moyen de contrôle de niveau du bain de lavage dans la cuve et un moyen pour récupérer l'eau de rinçage usagée, de manière à remettre à niveau et à régénérer le bain de lavage.

Le module de lavage 3 comprend avantageusement une sonde de mesure de la conductivité électrique du bain de lavage pour contrôler la concentration de produit lessiviel dans le bain de lavage et piloter la pompe de dosage de produit lessiviel en conséquence.

Le module de rinçage 4 comprend également une réserve d'eau associée à un générateur d'eau chaude instantanée 26 pour alimenter les rampes de rinçage 12 en eau chaude, avec une pression qui est celle du réseau de distribution d'eau. En option, il est possible de prévoir un surpresseur pour augmenter la pression de l'eau de rinçage alimentant les rampes de rinçage 12.

La soufflerie du module de séchage 5 est avantageusement un ventilateur de soufflante agencé dans un compartiment 27, lequel est relié aux rampes de séchage 13 par des conduites, non représentées.

A titre d'exemple, des extracteurs de buées 28 reliés à un système d'aspiration, sont également prévus sur le tunnel vertical 8.

Les moyens de commande pour piloter le fonctionnement automatisé de la machine de lavage peuvent également être intégrés dans le sous ensemble 24.

Les moyens de commande permettent donc de piloter le fonctionnement automatique des modules de lavage 3, de rinçage 4 et de séchage 5, ainsi que du système de transfert 14 et de la vitesse d'avance du convoyeur 6, en fonction de consignes et/ou en fonction de données lues par des capteurs.

A titre d'exemple, les moyens de commande permettent aussi de convoyer des supports 2 sans lavage, et/ou sans rinçage et/ou sans séchage, par désactivation du ou des modules concernés.

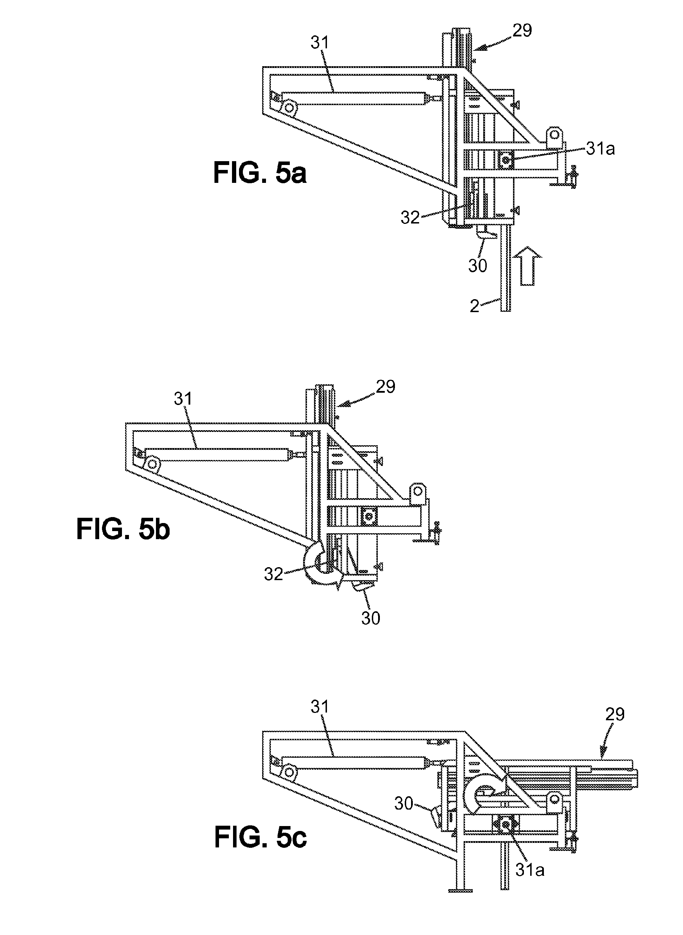

Le fonctionnement du système de transfert 14 est illustré aux figures 5a à 5e.

Le système de transfert 14 comporte un basculeur 29 dans une position initiale verticale, bloquant à son extrémité inférieure un support 2 arrivant en position verticale, dès que ledit support 2 est logé dans le basculeur 29. Le blocage est obtenu par l'intermédiaire d'une butée 30 escamotable par pivotement. L'insertion du support 2 dans le basculeur 29 est illustré à la figure 5a et le pivotement de la butée 30 venant se placer sous le bord inférieur du support 2 est illustré à la figure 5b.

Le système de transfert 14 comporte également un premier actionneur 31, du type vérin linéaire électrique, hydraulique ou pneumatique, pour pivoter le basculeur 29, par un axe de pivotement 31 a, d'une position verticale vers une position horizontale et inversement. Le pivotement en position horizontale est illustré à la figure 5c, l'actionneur 31 prenant appui par son cylindre sur un point fixe du bâti fixe du tunnel vertical, sur lequel le cylindre est articulé, et l'extrémité libre de la tige du vérin 31 est articulée sur un point fixe du basculeur 29.

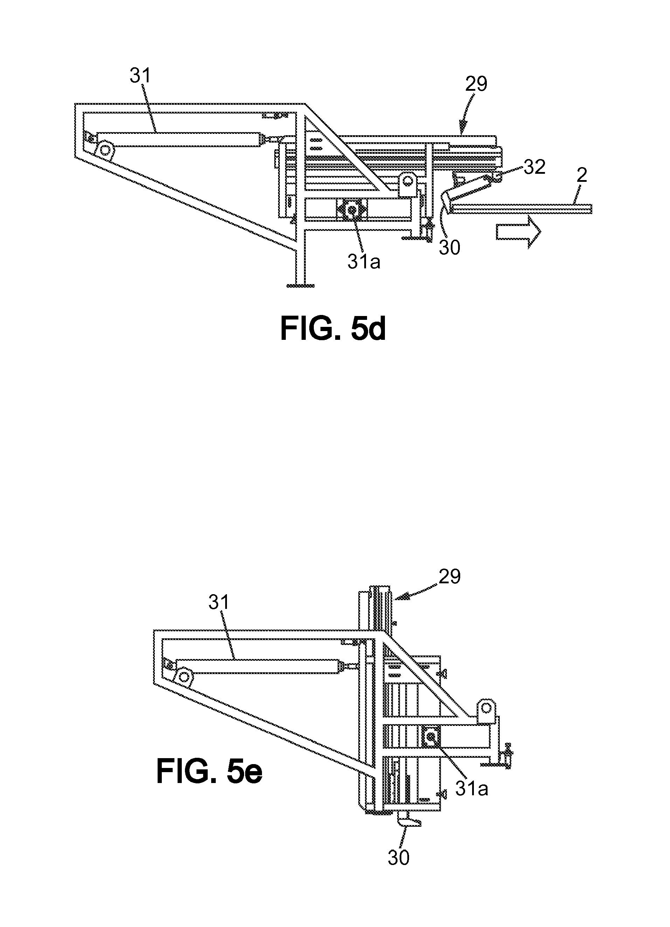

La butée 30 est montée pivotante sur un second actionneur agencé en chariot 32 mobile en translation le long du basculeur 29, de manière à évacuer ou éjecter horizontalement le support 2 du tunnel vertical 8, lorsque ledit basculeur 29 est en position horizontale et lorsque le chariot 32 se déplace horizontalement en entraînant la butée 30. Cette dernière, s'appuyant contre le bord inférieur ou arrière du support 2, exerce ainsi un effort horizontal sur ledit support 2, tel qu'illustré à la figure 5d.

La figure 5e montre le système de transfert 14, lorsque le support 2 est évacué. Le chariot 32 revient dans sa position initiale, la butée 30 pivote dans sa position non bloquante et le basculeur 29 reprend sa position verticale en attente d'un support 2 suivant.

Le déplacement du chariot 32 le long du basculeur 29 est assuré par des guides et le second actionneur, non représentés en détails, le second actionneur pouvant être du type vérin sans tige ou encore vérin linéaire, de type pneumatique par exemple, ou à système vis-écrou et à moteur électrique intégré dans le chariot 32, et vis fixée sur le basculeur, ou, inversement, à moteur fixé sur le basculeur et à vis fixée au chariot 32, pour pousser ou tirer ce dernier dans les deux sens le long des guides sur le basculeur 29.

Le pivotement de la butée 30 sur le chariot 32 est par exemple assuré par un actionneur complémentaire non représenté, monté sur le chariot 32, et pouvant aussi être du type vérin pneumatique.

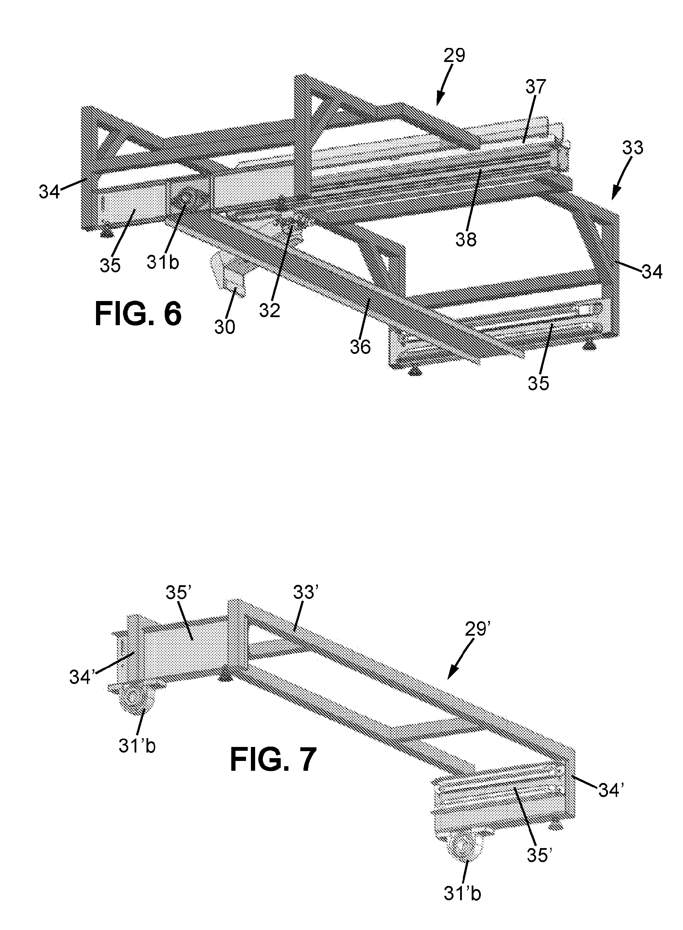

La figure 6 représente une réalisation plus détaillée du basculeur 29, qui comporte un châssis rigide 33 mécano-soudé à base de tubes métalliques de section carrée, ce châssis 33 ayant une section transversale sensiblement en forme de U renversé, dont chaque aile 34 supporte l'un respectivement de deux rails de guidage 35, parallèles et en vis-à-vis l'un de l'autre, et agencés comme les rails de guidage 16 en glissières, dans lesquelles les supports 2 sont pris en sandwich et peuvent glisser par leurs bords latéraux. Au dos des rails de guidage 35 sont prévus deux paliers coaxiaux 31b pour recevoir l'axe de pivot 31a. Sous les paliers 31 b, une traverse 36 de rigidification du basculeur 29 relie les bords inférieurs des rails 35 auxquels la traverse 36 est rigidement solidarisée. Une poutre 37, parallèle aux rails 35, est fixée au milieu de la partie supérieure du châssis 33 et supporte un autre rail 38, le long duquel le chariot mobile 32 est guidé et entraîné en va et vient par le second actionneur précité (non visible sur la figure 6), tandis que l'actionneur complémentaire, ou troisième actionneur, également non visible sur la figure 6 et pouvant être intégré au chariot 32, entraîne la butée escamotable 30, montée pivotante autour d'un axe horizontal et transversal sur le chariot 32, entre sa position de retenue et d'entraînement d'un support 2 (dans laquelle la butée 30 est représentée sur les figures 5b, 5c, 5d et 6) et sa position escamotée, dégagée de la trajectoire suivie par les supports 2 (et représentée sur les figures 5a et 5e).

Naturellement, la présente invention est sujette à de nombreuses variantes quant à sa mise en oeuvre. Bien qu'un ou plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

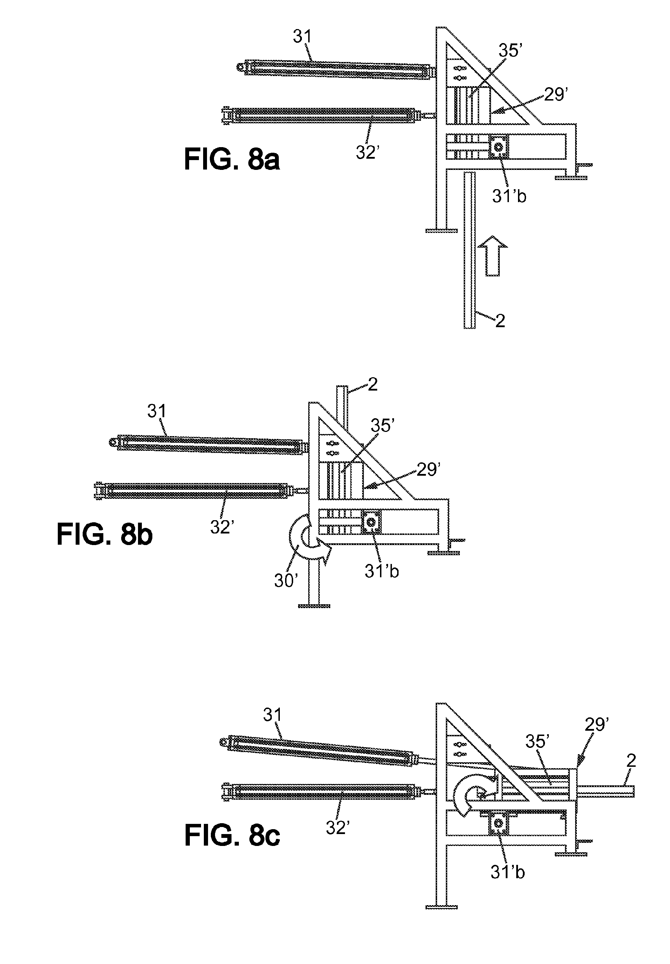

Par exemple, le basculeur 29 selon la figure 6 et dont le fonctionnement vient d'être décrit en référence aux figures 5a à 5e, peut être remplacé par la variante simplifiée de basculeur 29' représenté sur la figure 7, et dont le fonctionnement est décrit en référence aux figures 8a à 8e, qui correspondent respectivement aux phases de fonctionnement des figures 5a à 5e pour le basculeur 29. Le châssis 33' du basculeur 29', également mécano-soudé en tubes métalliques, et également de forme générale de section en U renversé, se limite à une partie supérieure formée par deux traverses reliées par deux entretoises, et à deux ailes 34', dont chacune comprend deux montants parallèles, fixés perpendiculairement aux extrémités des traverses de la partie supérieure, et supportant chacune l'un respectivement de deux rails de guidage 35', parallèles et en vis-à-vis l'un de l'autre, pour guider les supports 2, dont les bords latéraux sont pris en sandwich chacun dans l'un respectivement des rails 35', sous chacun desquels est fixé l'un respectivement des deux paliers 31'b coaxiaux, au niveau du montant arrière de l'aile 34' correspondante.

La butée escamotable 30', pour retenir les supports 2 par leur bord inférieur, en position verticale du basculeur 29', n'est pas fixée sur le basculeur 29', mais sur le bâti du tunnel vertical 8, et l'ensemble du second actionneur, du chariot mobile 32 et de l'actionneur complémentaire du basculeur 29 est remplacé par un second actionneur 32', constitué par un vérin linéaire standard, fixé sur le bâti du tunnel vertical 8 et agissant comme poussoir sur les supports 2 pour les faire glisser sur les rails 35' et les faire sortir de ces derniers, vers le dispositif de stockage vertical 15, quand le basculeur 29' est en position horizontale, ce second actionneur 32' étant voisin du premier actionneur 31 assurant le basculement du basculeur 29', autour de l'axe de basculement 31a reçu dans les paliers 31'b, et qui est le même actionneur 31 que celui qui pivote le basculeur 29 de la figure 6, comme on le voit sur les figures 8a à 8e.

En conséquence, la poutre 37 et le rail 38 du basculeur 29 sont également supprimés sur le basculeur 29'.La première phase ou étape du fonctionnement du basculeur 29', sur la figure 8a, correspond au chargement d'un support 2 dans le basculeur 29', ce support 2 sortant du tunnel vertical 8 et s'engageant entre les deux rails 35' du basculeur 29' vertical, jusqu'à la position de la figure 8b, comme cela est le cas entre les deux rails 35 sur la figure 5a sur le basculeur 29. Dans la seconde étape, sur la figure 8b, la butée escamotable, schématisée par la flèche 30', est pivotée en position de maintien d'un support 2 engagé dans le basculeur 29', et n'est pas nécessairement actionnée par un actionneur pneumatique, comme cela est de préférence le cas de la butée 30 sur le chariot 32 du basculeur 29. Dans ces deux étapes, les deux vérins 31 et 32' restent dans la position tige rétractée.

Dans la troisième étape, sur la figure 8c, la sortie de la tige du vérin 31 a provoqué le basculement de 90° du basculeur 29', ce qui place le support 2 engagé dans le basculeur 29' à l'horizontal.

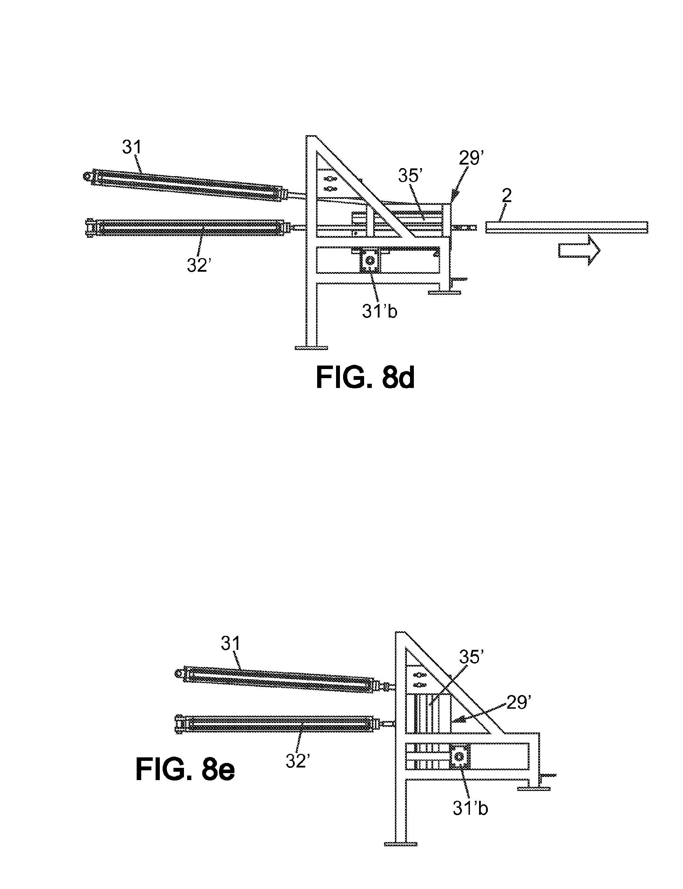

Puis, à la quatrième étape, sur la figure 8d, la sortie de la tige du second vérin 32', par exemple pneumatique et fixé au bâti du tunnel vertical 8, comme cela est le cas du vérin 31, provoque l'éjection du support 2 hors du basculeur 29', par la poussée exercée par le vérin 32' sur ce support 2, dans le sens indiqué par la flèche horizontale, vers le dispositif de stockage vertical 15. Le support 2 n'est plus entraîné par la butée escamotable 30' et par le déplacement du chariot 32, qui n'est plus présent dans ce montage.

Enfin, dans la dernière étape, sur la figure 8e, la rétraction des tiges des deux vérins 32' et 31 ramène le basculeur 29' dans sa position initiale, prêt à recevoir un autre support 2.

Pour le reste, une machine de lavage en ligne dont le système de transfert est équipé du basculeur simplifié 29' fonctionne comme la machine de lavage en ligne précédemment décrite et équipée du basculeur 29 de la figure 6.

## Revendications

1. Machine de lavage pour supports de cuisson, comportant un tunnel dit « horizontal » (7) pourvu d'une ouverture d'alimentation (1) par laquelle pénètrent les supports (2) à laver, un tunnel dit « vertical » (8) sur lequel débouche ledit tunnel horizontal (7) et dans lequel un module de lavage (3), et un module de rinçage (4), sont agencés, du bas vers le haut, un module de séchage (5) desdits supports (21), un convoyeur (6) pour acheminer en succession les supports (2) d'un module au suivant, et dont une première partie s'étend sensiblement horizontalement dans le tunnel horizontal (7), un système de transfert (14) localisé en aval des modules de lavage (3), rinçage (4) et séchage (5), de manière à récupérer successivement les supports (2) et à les transférer vers un dispositif de stockage sensiblement vertical (15), et des moyens de commande pour piloter le fonctionnement automatisé des modules de lavage (3) rinçage (4) et séchage (5), du système de transfert (14) et du convoyeur (6), **caractérisée en ce que** le convoyeur (6) s'étend de ladite ouverture d'alimentation (1) dudit tunnel horizontal (7) à une ouverture de sortie (9) située à l'extrémité supérieure dudit tunnel vertical (8) dans lequel ledit module de séchage (5) est agencé au-dessus du module de rinçage (4) entre ce dernier et ladite ouverture de sortie (9) du tunnel vertical (8), au-dessus duquel est disposé ledit système de transfert (14) récupérant les supports (2) évacués en position sensiblement verticale par l'ouverture de sortie (9), et les basculant en position sensiblement horizontale, dans laquelle les supports (2) sont transférés audit dispositif de stockage (15).

2. Machine de lavage selon la revendication 1,
**caractérisée en ce que** le convoyeur (6) comporte deux chaînes (10) sans fin avec taquets pour entraîner les supports (2), qui sont maintenus en contact contre lesdites chaînes (10) chacune en regard de l'une respectivement des deux extrémités latérales du convoyeur (6).

3. Machine de lavage selon l'une quelconque des revendications 1 et 2, **caractérisée en ce qu'**elle comporte au moins un moyen de maintien (19) des supports (2), agencé dans une zone de transition entre le tunnel horizontal (7) et le tunnel vertical (8), pour maintenir les supports (2) sur le convoyeur (6) et pour éviter un basculement desdits supports (2) lors du convoyage desdits supports (2) dans la zone de transition.

4. Machine de lavage selon la revendication 3, **caractérisée en ce que** le moyen de maintien (19) comporte au moins un bras (20) monté pivotant sur un cadre fixe (21) au voisinage et en regard de chaque extrémité latérale du convoyeur (6), une roulette (22) montée sur l'extrémité libre de chaque bras (20) et au moins une tige transversale (23) reliant les extrémités libres de deux bras (20) en regard chacun de l'une respectivement des deux extrémités latérales du convoyeur (6), de manière à venir en appui sur les supports (2) avec les roulettes (22) sous l'effet du poids dudit moyen de maintien (19).

5. Machine de lavage selon l'une quelconque des revendications 1 à 4, **caractérisée en ce que** le système de transfert (14) comporte un basculeur (29, 29') bloquant un support (2) en position sensiblement verticale à son extrémité inférieure dès que ledit support (2) sortant de l'ouverture de sortie (9) du tunnel vertical (8) est logé dans le basculeur (29, 29'), le blocage étant obtenu par l'intermédiaire d'une butée (30, 30') escamotable, un actionneur (31) pour pivoter le basculeur (29, 29') d'une position sensiblement verticale à une position sensiblement horizontale et inversement, et un second actionneur (32) pour évacuer sensiblement horizontalement ledit support (2) lorsque le basculeur (29, 29') est en position sensiblement horizontale.

6. Machine de lavage selon l'une quelconque des revendications 1 à 5, **caractérisée en ce que** le module de lavage (3) comprend au moins deux rampes de lavage (11) pourvues de gicleurs et localisées de part et d'autre du trajet des supports (2), une cuve contenant une réserve de bain de lavage et au moins un tube chauffant immergé (25) dans ladite réserve et associé à une sonde de mesure de température, une pompe de dosage de produit lessiviel, une pompe pour alimenter les rampes de lavage (11) en bain de lavage et un moyen pour récupérer le bain de lavage usagé, associé à un système de filtration.

7. Machine de lavage selon la revendication 6, **caractérisée en ce que** le module de lavage (3) comporte un moyen de contrôle de niveau d'eau dans la cuve et un moyen pour récupérer l'eau de rinçage de manière à remettre à niveau et/ou à régénérer le bain de lavage.

8. Machine de lavage selon la revendication 6 ou 7, **caractérisée en ce que** le module de lavage (3) comprend une sonde de mesure de la conductivité électrique du bain de lavage pour contrôler la concentration de produit lessiviel dans le bain de lavage.

9. Machine de lavage selon l'une quelconque des revendications 1 à 8, **caractérisée en ce que** le module de rinçage (4) comporte au moins deux rampes de rinçage (12) pourvues de gicleurs et localisées de part et d'autre du trajet des supports (2) lavés, et une réserve d'eau associée à un générateur d'eau chaude instantanée (26), pour alimenter les rampes de rinçage (12) en eau chaude, par exemple par la pression du réseau de distribution d'eau ou par un surpresseur.

10. Machine de lavage selon l'une quelconque des revendications 2 à 9, **caractérisée en ce que** le module de séchage (5) comporte une soufflerie à air froid alimentant au moins deux rampes de soufflage (13) localisées de part et d'autre du trajet des supports (2) rincés et qui constituent des lames d'air.

11. Machine de lavage selon l'une quelconque des revendications 1 à 10, **caractérisée en ce qu'**elle comporte au moins un extracteur (28) des buées de lavage.

12. Machine de lavage selon l'une quelconque des revendications 1 à 11, **caractérisée en ce que** les moyens de commande permettent de piloter le fonctionnement automatique des modules de lavage (3), de rinçage (4) et de séchage (5), ainsi que du système de transfert (14) et de la vitesse d'avance du convoyeur (6), en fonction de consignes.

13. Machine de lavage selon la revendication 12, **caractérisée en ce que** les moyens de commande permettent de convoyer des supports (2) sans lavage, et/ou sans rinçage et/ou sans séchage par désactivation du ou des modules (3,4,5) concernés.

14. Sous ensemble d'une ligne automatisée de cuisson ou de panification comprenant une machine de lavage conforme à l'une quelconque des revendications précédentes, et associée à un dispositif de stockage vertical (15) pour empiler des supports (2) propres sensiblement horizontaux.
